**Europäisches Patentamt**

**European Patent Office**

**Office européen des brevets**

(19)

(11) Numéro de publication: **0 005 387**
**B1**

(12)

# FASCICULE DE BREVET EUROPEEN

(45) Date de publication du fascicule du brevet: **27.01.82**

(51) Int. Cl.³: **H 01 C 7/10** //H02G15/06

(21) Numéro de dépôt: **79400230.3**

(22) Date de dépôt: **09.04.79**

(54) **Mastic à résistance électrique non linéaire et élément de revêtement de zone de raccordement de matériel électrique.**

(30) Priorité: **11.04.78 FR 7810672**

(43) Date de publication de la demande:
**14.11.79 Bulletin 79/23**

(45) Mention de la délivrance du brevet:
**27.01.82 Bulletin 82/4**

(84) Etats contractants désignés:
**BE CH DE GB IT LU NL**

(56) Documents cités:
**DE - A - 2 739 600**
**FR - A - 1 564 289**
**FR - A - 2 197 725**
**FR - A - 2 307 351**

(73) Titulaire: **SOCIETE INDUSTRIELLE DE LIAISONS ELECTRIQUES - SILEC**
**64bis, rue de Monceau**
**F-75008 Paris (FR)**

(72) Inventeur: **Rossignol, Georges**
**12, rue Léo Lagrange**
**F-77130 Montereau (FR)**

(74) Mandataire: **Fruchard, Guy et al,**
**Novapat-Cabinet Chereau 107, bld Péreire**
**F-75017 Paris (FR)**

Courier Press, Leamington Spa, England.

## Mastic à résistance électrique non linéaire et élément de revêtement de zone de raccordement de matériel électrique

La présente invention concerne des mastics à résistance électrique non linéaire.

On entend par mastic dans la présente demande un produit ayant sensiblement la consistance du mastic de vitrier, mais, gardant cette consistance, c'est-à-dire n'ayant pas tendance à durcir au cours du temps. On entend par résistance électrique non linéaire une résistance électrique qui varie en fonction de la tension appliquée V de telle sorte que l'intensité I qui la traverse obéisse à la relation $I = KV^\gamma$. K et $\gamma$ étant des constantes et $\gamma$ ayant une valeur supérieure à 1.

Ces mastics à résistance électrique non linéaire peuvent notamment être utilisés pour revêtir des extrémités de câbles électriques. En effet, quand un câble doit être interrompu pour être raccordé par exemple à une borne, ou à un ou plusieurs autres câbles, des effluves électriques tendent à se produire entre l'âme du câble et l'écran conducteur entourant cette âme (avec interposition d'un isolant) et il est connu que l'application d'un produit à résistance électrique non linéaire autour du câble, au voisinage de la portion où l'écran conducteur est interrompu, permet d'éviter ces effluves et les détériorations résultantes de l'extrémité du câble. Ce produit joue alors un rôle de répartiteur de champ.

Dans l'art antérieur, il est connu de revêtir une extrémité de câble d'une pâte à résistance électrique non linéaire, consistant en un mélange de carbure de silicium et d'une graisse ou d'une huile isolante de la famille des silicones. Mais comme, de façon générale, on protège ensuite la zone revêtue du produit à résistance non linéaire d'une gaine de protection en un matériau élastique ou thermorétractable sensiblement isolant, la pression exercée par cette gaine tend à faire fluer la pâte de l'art antérieur qui présente une fluidité trop grande.

La demande de brevet français 2.307.351 décrit ainsi une matière élastomère pour la réduction de contraintes électriques constituée d'un mélange d'un élastomère fluable à froid incluant un plastifiant liquide, et renfermant des charges à caractéristiques de résistance électrique non-linéaire dans des proportions supérieures à 3,6 parties en poids pour une partie en poids du polymère de base du matériau. Ce matériau nécessite son application par fluage à froid sur un matériel électrique par une force de compression notable exercée par une bande isolante haute tension.

Ainsi, un objet de la présente invention est de prévoir un nouveau produit de revêtement à résistance électrique non linéaire se présentant sous forme d'un mastic ayant une faible propension à fluer sous l'influence de la pression et/ou de la chaleur. Selon la présente invention, les mastics envisagés ont une consistance telle qu'ils ne subissent ni égouttement ni déplacement excessif au cours de la mise en place de la gaine de protection extérieure et au cours du fonctionnement même à des températures relativement élevées pouvant aller jusqu'à 100°C.

Par contre, l'aptitude au fluage de mastics selon la présente invention est suffisante pour qu'ils épousent parfaitement la forme des matériels électriques sur lesquels ils sont placés. Par exemple, dans la ces des câbles électriques, au niveau de la zone où l'écran défini précédemment est arrêté, ce mastic épouse parfaitement les formes sous-jacentes, prévient la formation d'effluves électriques et réalise l'étanchéité de la partie recouverte.

Enfin les mastics selon la présente invention se présentent sous une forme et un conditionnement tels que leur mise en place sur les câbles est rapide et aisée.

Ces objets et avantages de la présente invention sont atteints en prévoyant des mastics auto-amalgamants ayant la composition suivante:

a) 8 à 40 parties en poids d'un ou plusieurs polymères solides présentant une cristallinité faible ou nulle;

b) 5 à 40 parties en poids de plastifiant liquide;

c) 40 à 75 parties en poids de charges fournissant une caractéristique de résistance électrique non linéaire;

Cette composition, à faible quantité de charges à résistance électrique non-linéaire permettant l'obtention des caractéristiques électriques requises, se traduit par un effet auto-amalgamant prononcé, une grande souplesse du produit permettant sa mise en place aisée sur des matériels aux formes évolutives diverses et assurant une meilleure régularité de la dispersion des charges à caractéristiques non-linéaires garantissant une meilleure efficacité et une fiabilité améliorée au mastic.

Parmi les polymères solides utilisables dans la présente invention, on peut citer le caoutchouc naturel, le polychloroprène, le polyisobutylène solide, le caoutchouc butyle, les EPM (caoutchouc d'éthylène-propylène) et EPDM (caoutchouc d'éthylènepropylène-monomère diénique) et le caoutchouc de silicone.

Parmi les plastifiants, on peut citer les huiles minérales, le polyisobutylène liquide, les esters d'alcools gras tels que phtalates, phosphates, etc..., les plastifiants polymères, etc...

Parmi les charges destinées à conférer au mastic sa caractéristique de résistance non linéaire, on peut citer notamment le carbure de silicium, les oxydes métalliques tels que la silice naturelle ou précipitée, l'oxyde de titane, l'oxyde de zinc, la magnésie, l'alumine, l'amiante, le titanate de baryum, etc...

Parmi les charges complémentaires, on peut citer le noir de carbone, la silice pyrogénée, la craie, le kaolin.

Parmi les additifs destinés à augmenter le pouvoir collant et auto-amalgamant, on peut citer les hydrocarbures aromatiques tels que les produits dits Kenflex A, L et N de la société dite Kenrich Petrochems, la colophane et ses dérivés, les résines de coumarone-indène, les résines terpéniques, les résines provenant de la polymérisation de mélanges d'oléfines et de dioléfines telles que le produit dit Wing-Tack 95 de la société dite Goodyear Tire and Rubber.

Les anti-oxydants sont choisis parmi les anti-oxydants habituels des caoutchoucs et des matières plastiques.

A partir de ces divers composants, le mastic est obtenu par malaxage par exemple dans un mélangeur à pales en Z.

Ensuite, le mastic peut par exemple être mis sous forme de feuille ou de ruban enroulé sur lui-même avec interposition d'un film anti-adhésif.

Le tableau ci-dessous illustre en I un exemple de composition de l'art antérieur et en II et III des exemples de composition selon la présente invention, les valeurs numériques désignant des portions pondérales. Les mastics des exemples II et III ont été réalisés par malaxage dans un mélangeur à pales en Z dit GUITTARD ML 5.

TABLEAU

| Exemple / Composition | I | II | III |
|---|---|---|---|
| Graisse silicone Rhodorsil 430 R | 43 | — | — |
| Caoutchouc butyle Butyl 100 | — | 30 | 25 |
| Caoutchouc EPDM Vistalon 3708 | — | — | 5 |
| Huile T 119 | — | — | 4 |
| Polyisobutylène liquide Napvis 30 | — | 9,5 | 3,5 |
| Carbure de silicium Carborandum 280 | 57 | 60 | 60 |
| Silice pyrogénée | — | 2 | — |
| Wing Tack 95 | — | — | 2 |
| Anti-oxydant Permanax 45 | — | 0,5 | 0,5 |

Les divers produits cités dans le tableau sont disponibles auprès des sociétés suivantes:

Rhodorsil 430 R = Rhône Poulenc;  Carborandum 280 = Carborandum

Butyl 100        = Polysar       ;  Napvis 30        = Naphtachimie

Vistalon 3708    = Exxon         ;  Wing Tack 95     = Goodyear

Huile T 119      = Esso Standard ;  Permanax 45      = Vulnax

A titre d'application de la présente invention, on peut citer le revêtement d'extrémités de câbles électriques moyenne ou haute tension pour éviter la production d'effluves et la détérioration du câble. Ce revêtement est lui-même recouvert d'une gaine externe isolante réalisée par exemple à l'aide d'un ruban adhésif, d'une gaine thermorétractable ou d'une gaine élastique. Les feuilles de mastic selon la présente invention sont choisies selon des dimensions adaptées à la grosseur des câbles et sont mises en place sur le câble par simple enroulement avec recouvrement suivant une génératrice. Dans tous les cas le mastic se moule parfaitement sur le câble sans inclusion d'air, en particulier au niveau de la zone où s'arrête l'écran de blindage électrique du câble, et on n'observe aucun écoulement du mastic, ni au cours de la mise en place de la gaine protectrice extérieure, ni au cours d'essais de longue durée pendant lesquels, l'âme conductrice des câbles est portée à 100°C.

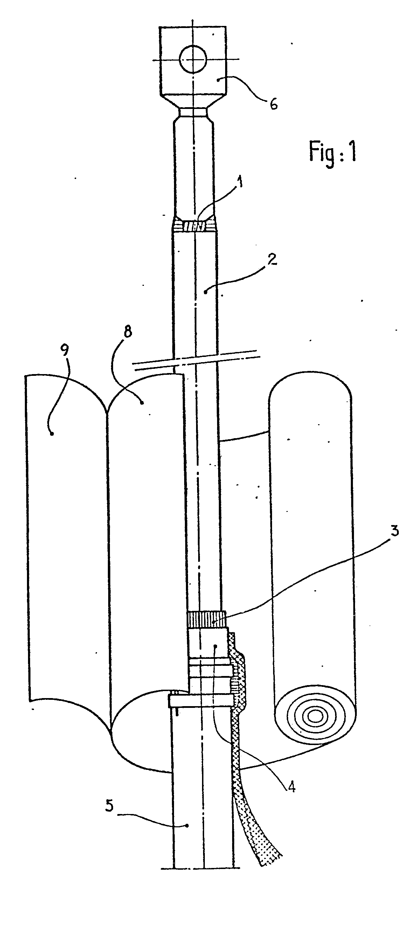

Les figures 1, 2 et 3 illustrent plus particulièrement à titre d'exemples d'application, le revêtement d'une zone d'arrêt d'écran d'un câble électrique particulier par un mastic selon la présente invention.

Les figures 1, 2 et 3 représentent une extrémité de câble en cours de réalisation. Ce câble comprend une âme toronnée 1, un isolant 2, un écran 3 semi-conducteur (c'est-à-dire, en langage de câblier, constitué d'un matériau composite à base de polymère rendu conducteur de l'électricité par addition d'un noir de carbone approprié), un recouvrement conducteur 4 tel qu'une bande d'aluminium ou de cuivre, et une gaine isolante 5. Une telle extrémité de câble est par exemple destinée à être reliée à une cosse 6; mais il faut noter que la cosse peut être remplacée par un organe de connexion qui permet la jonction avec un autre câble ou la dérivation avec d'autres câbles.

En figure 1, la feuille de mastic 8 selon l'invention, enroulée sur elle-même avec interposition d'une bande anti-adhésive 9 est déroulée et réenroulée autour du câble au niveau de la zone d'arrêt de l'écran semi-conducteur 3.

La bande anti-adhésive est enlevée progressivement lors de l'enroulement autour de câble. Le mastic est auto-amalgamant et se maintient sur le câble.

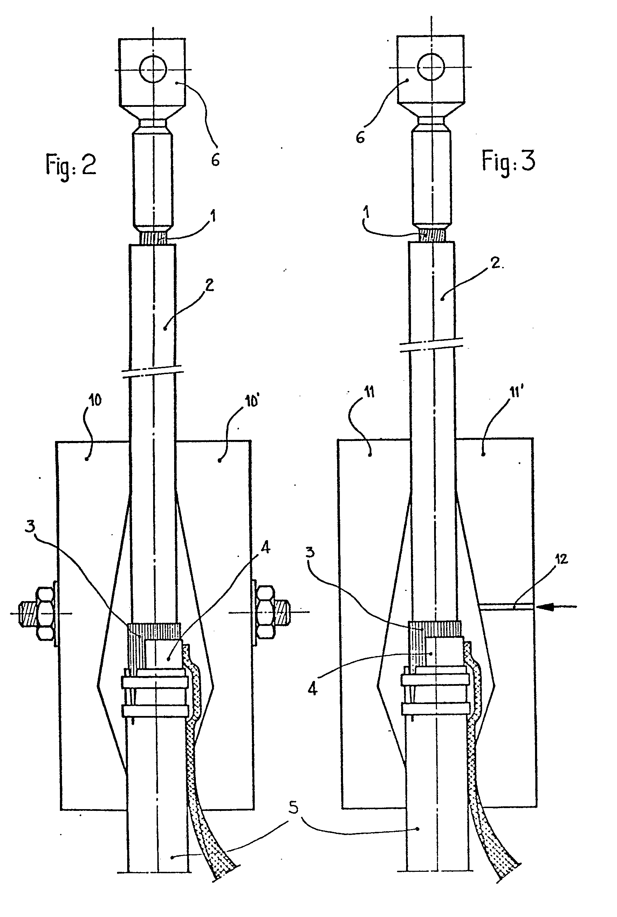

En variante de la présente invention, la mise en place du mastic est effectuée par enroulement et il est ensuite comprimé à l'aide de demi-coquilles 10, 10' métalliques ou en matière plastique (figure 2) afin de donner au mastic une forme appropriée: soit cylindrique, soit bitronconique, de manière à ce que la surépaisseur de mastic soit située dans la zone de l'arrêt d'écran et permette un écoulement favorable des courants de fuite vers la prise de terre sans échauffement anormal. On peut réaliser également la mise en place du mastic par injection par un orifice 12 dans deux demi-coquilles 11, 11' (figure 3) serrées autour du câble. Ces deux derniers procédés, compression et injection ont l'avantage de permettre la réalisation d'une forme souhaitée.

Ensuite, une gaine est posée par tout procédé approprié autour et au-delà de la zone enduite de mastic.

La présente invention n'est pas limitée aux exemples de réalisation qui viennent d'être décrits, elle est au contraire susceptible de variantes et de modifications qui apparaîtront à l'homme de l'art.

**Revendications**

1. Mastic à résistance électrique non-linéaire comprenant un mélange d'au moins un polymère solide présentant une cristallinité faible ou nulle, d'un plastifiant liquide et de charges fournissant une caractéristique de résistance électrique non-linéaire, caractérisé en ce qu'il comprend:

a) de 20 à 40 parties en poids d'au moins un desdits polymères solides;

b) de 5 à 40 parties en poids de plastifiant liquide; et

c) de 40 à 75 parties en poids des charges fournissant une caractéristique de résistance électrique non-linéaire.

2. Mastic selon la revendication 1, caractérisé en ce que les polymères solides sont choisis dans le groupe comprenant le caoutchouc naturel, le polychloroprène, le polyisobutylène solide, le caoutchouc butyle, les EPM (caoutchouc d'éthylène-propylène) et EPDM (caoutchouc d'éthylène-propylène-monomère diénique) et le caoutchouc de silicone.

3. Mastic selon la revendication 1, caractérisé en ce que les plastifiants sont choisis dans le groupe comprenant les huiles minérales, le polyisobutylène liquide, les esters d'alcools gras tels que phtalates, phosphates, les plastifiants polymères.

4. Mastic selon la revendication 1, caractérisé en ce que les charges destinées à conférer au mastic sa caractéristique de résistance non-linéaire sont choisies dans le groupe comprenant le carbure de silicium, les oxydes métalliques tels que le silice naturelle ou précipitée, l'oxyde de titane, l'oxyde de zinc, la magnésie, l'alumine, l'amiante, le titanate de baryum.

5. Mastic selon l'une quelconque des revendications 1 à 4, caractérisé en ce qu'il comprend en outre:

a) de 0 à 40 parties en poids de charges complémentaires destinées à modifier la dureté et à améliorer la conductivité thermique;

b) de 0 à 20 parties en poids d'additifs destinés à augmenter le pouvoir collant et auto-amalgamant;

c) de 0 à 3 parties en poids d'anti-oxydant.

6. Mastic selon la revendication 5, caractérisé en ce que les charges complémentaires sont choisies dans le groupe comprenant le noir de carbone, la silice pyrogénée, la craie, le kaolin.

7. Mastic selon la revendication 5, caractérisé en ce que les additifs destinés à augmenter le pouvoir collant et auto-amalgamant sont choisis dans le groupe comprenant les hydrocarbures aromatiques tels que ceux qui sont obtenus par condensation de méthylnaphtalène et de formaldéhyde, la colophane et ses dérivés, les résines de coumarone-indène, les résines terpéniques, et les résines provenant de la polymérisation de mélange d'oléfines et de dioléfines.

8. Mastic selon l'une quelconque des revendications 1 à 7, caractérisé en ce qu'il comprend:

a) de 25 à 30 parties en poids de caoutchouc butyle et de 0 à 5 parties en poids de caoutchouc EPDM,

b) de 3 à 10 parties en poids de polyisobutylène liquide et de 0 à 4 parties en poids d'huile minérale,

c) de 55 à 65 parties en poids de carbure de silicium,

d) de 0 à 5 parties en poids de silice pyrogénée,

e) de 0 à 5 parties en poids de résine provenant de la polymérisation de mélanges d'oléfines et de dioléfines,

f) de 0 à 3 parties en poids d'anti-oxydant.

9. Elément de revêtement de zone de raccordement de matériel électrique, caractérisé en ce qu'il comprend une couche continue de mastic selon l'une quelconque des revendications 1 à 8, mise en place sur la zone de raccordement et entourée d'une gaine protectrice isolante.

10. Elément de revêtement selon la revendication 9, caractérisé en ce que le mastic appliqué sur la zone de raccordement est moulé pour être mis en forme avant gainage.

11. Elément de revêtement selon la revendication 9, caractérisé en ce que le mastic est appliqué sur la zone de raccordement par injection.

12. Elément de revêtement selon la revendication 9, caractérisé en ce que le mastic est enroulé sous forme de bande sur la zone de raccordement.

**Patentansprüche**

1. Mastix mit einem nicht linearen elektrischen Widerstand, bestehend aus einem Gemisch von zumindest einem festen Polymeren mit geringer oder fehlender Kristallinität, einem flüssigen Weichmacher und Füllstoffen, die eine nicht lineare elektrische Widerstandscharakteristik ergeben, dadurch gekennzeichnet, daß sie besteht aus

a) 20 bis 40 Gewichtsteilen des zumindest einen festen Polymeren;

b) 5 bis 40 Gewichtsteilen des Weichmachers; und

c) 40 bis 75 Gewichtsteilen der Füllstoffe, die eine nicht lineare elektrische Widerstandscharakteristik ergeben.

2. Mastix nach Anspruch 1, dadurch gekennzeichnet, daß die festen Polymeren aus einer Gruppe ausgewählt sind, die aus Naturkautschuk, Polychloropren, festem Polyisobutylen, Butylkautschuk, EPM (Äthylen-Propylen, Kautschuk) und EPDM (Äthylen-Propylen-Dien-Kautschuk), sowie Silikonkautschuk besteht.

3. Mastix nach Anspruch 1, dadurch gekennzeichnet, daß die Weichmacher aus einer Gruppe ausgewählt sind, die aus Mineralölen, flüssigem Polyisobutylen, Fett-Alkohol-Estern von beispielsweise Phthalsäure oder Phosphorsäure, sowie plastifizierenden Polymeren besteht.

4. Mastix nach Anspruch 1, dadurch gekennzeichnet, daß die Füllstoffe, die der Mastix eine nicht lineare Widerstandscharakteristik verleihen sollen, aus einer Gruppe ausgewählt sind, die aus Siliziumkarbid, Metalloxiden, wie natürlichem oder ausgefällten Siliziumoxid, Titanoxid, Zinkoxid, Magnesiumoxid, Aluminiumoxid, Asbest sowie Bariumtitanat besteht.

5. Mastix nach einem der vorstehenden Ansprüche 1 bis 4, dadurch gekennzeichnet, daß sie weiterhin besteht aus

a) 0 bis 40 Gewichtsteilen Zusatzstoffen, um die Härte einzustellen und die Wärmeleitfähigkeit zu verbessern;

b) 0 bis 20 Gewichtsteilen Additiven, um die Klebekraft und die selbstätige Amalgamierung zu erhöhen;

c) 0 bis 3 Gewichtsteilen eines Antioxidationsmittels.

6. Mastix nach Anspruch 5, dadurch gekennzeichnet, daß die Zusatzstoffe aus einer Gruppe ausgewählt sind, die aus Ruß, pyrogenem Siliziumoxid, Kreide und Kaolin besteht.

7. Mastix nach Anspruch 5, dadurch gekennzeichnet, daß die Additive, die die Klebekraft sowie die selbsttätige Amalgamierung erhöhen sollen, aus einer Gruppe ausgewählt sind, die aus aromatischen Kohlenwasserstoffen, wie sie beispielsweise durch Kondensation von Methylnaphthalin und Formaldeyd erhalten werden, Kolophonium und seinen Derivaten, Coumaron-Inden-Harzen, Terpen-Harzen sowie Harzen, die durch Polymerisation eines Gemischs von Olefinen und Diolefinen erhalten werden, besteht.

8. Mastix nach einem der Ansprüche 1 bis 7, dadurch gekennzeichnet, daß sie besteht aus

a) 25 bis 30 Gewichtsteilen Butylkautschuk und 0 bis 5 Gewichtsteilen EPDM-Kautschuk,

b) 3 bis 10 Gewichtsteilen flüssigem Polyisobutylen und 0 bis 4 Gewichtsteilen Mineralöl,

c) 55 bis 65 Gewichtsteilen Siliziumkarbid,

d) 0 bis 5 Gewichtsteilen pyrogenem Silizium,

e) 0 bis 5 Gewichtsteilen eines Harzes, das durch Polymerisation eines Gemischs aus Olefinen und Diolefinen erhalten wird,

f) 0 bis 3 Gewichtsteilen eines Antioxidationsmittels.

9. Umhüllungselement für eine Verbindungsstelle aus elektrischem Material, dadurch gekennzeichnet, daß es eine kontinuierliche Schicht aus einer Mastix nach einem der Ansprüche 1 bis 8 umfaßt, die an der Verbindungsstelle angeordnet und von einer Isolierschutzhülle umgeben ist.

10. Umhüllungselement nach Anspruch 9, dadurch gekennzeichnet, daß die Mastix, die an der Verbindungsstelle angebracht wird, geschmolzen wird, um sie vor dem Aufbringen der Hülle in die richtige Form zu bringen.

11. Umhüllungselement nach Anspruch 9, dadurch gekennzeichnet, daß die Mastix an der Verbindungsstelle durch Injektion aufgebracht wird.

12. Umhüllungselement nach Anspruch 9, dadurch gekennzeichnet, daß die Mastix als Band auf die Verbindungsstelle gewickelt wird.

## Claims

1. Mastic with a non-linear electric resistance, comprising a mixture of at least a solid polymer having a low or zero cristallinity, of a liquid plasticizer, and of fillers furnishing non-linear electric resistance characteristics, characterized in that it comprises:

a) from 20 to 40 parts in weight of at least one of said polymers;

b) from 5 to 40 parts in weight of said liquid plasticizer; and

c) from 40 to 75 parts in weight of said fillers furnishing non-electric resistance characteristics.

2. Mastic according to claim 1, characterized in that said solid polymers are chosen in the group comprising natural rubber, polychloroprene, solid polyisobutylene, butyl rubber, EPM (ethylene-propylene rubbers) and EPDM (ethylene-propylene-dienic monomer rubbers), and silicone rubber.

3. Mastic according to claim 1, characterized in that said plasticizer is chosen in the group comprising mineral oils, liquid poly-isobutilene, fatty acid esters such as phtalates, phosphates, and plasticizing polymers.

4. Mastic according to claim 1, characterized in that said fillers conferring to the mastic its non-linear electric resistance characteristics are chosen in the group comprising silicon carbide, metal oxydes such as natural or precipitated silica, titanium dioxyde, zinc oxyde, magnesia or alumina, asbestos and baryum titanate.

5. Mastic according to any of claims 1 to 4, characterized in that it further comprises:

a) from 0 to 40 parts in weight of complementary fillers for modifying hardness and improving thermal conductivity;

b) from 0 to 20 parts in weight of additives for improving the sticking and self-amalgamating properties; and

c) from 0 to 3 parts in weight of an anti-oxydant.

6. Mastic according to claim 5, characterized in that said complementary fillers are chosen in the group comprising carbon black, pyrogenic silica, chalk, kaolin.

7. Mastic according to claim 5, characterized in that said fillers for improving the sticking and self-amalgamating properties are chosen in the group comprising the aromatic hydrocarbons, such as those obtained by condensation of methylnaphthalene and formaldehyde, rosin and its derivatives, the coumarone-indene resins, the terpenic resins, and the resins coming from polymerisation of mixtures of olefins and diolefins.

8. Mastic according to any of claims 1 to 7, characterized in that it comprises:

a) from 25 to 30 parts in weight of butyl rubber and from 0 to 5 parts in weight of EPDM rubber;

b) from 3 to 10 parts in weight of liquid polyisobutylene and from 0 to 4 parts in weight of mineral oil;

c) from 55 to 65 parts in weight of silicon carbide;

d) from 0 to 5 parts in weight of pyrogenic silica;

e) from 0 to 5 parts in weight of a resin coming from polymerisation of mixtures of olefins and diolefins; and,

f) from 0 to 3 parts in weight of an anti-oxydant.

9. Coating element for coating the connection zone of electrical components, characterized in that it comprises a continuous layer of the mastic according to any of claims 1 to 8 which is arranged on said connection zone and is surrounded by an insulating protective sheath.

10. A coating element according to claim 9, characterized in that the mastic applied onto the connection zone is moulded to be shaped before the sheathing.

11. A coating element according to claim 9, characterized in that the mastic is applied by injection onto the connection zone.

12. A coating element according to claim 9, characterized in that the mastic is wound in the form of a band around the connection zone.

Fig : 1

Fig: 2

Fig: 3